# FASCICULE DE BREVET EUROPEEN

(11) **EP 1 370 207 B1**
(45) Date de publication et mention de la délivrance du brevet: **23.04.2008**
(21) Numéro de dépôt: 02753581.4
(22) Date de dépôt: 20.03.2002
(51) Int. Cl.: A61G 1/06

(54) **CIVIERE AUTO-PORTEE POUR TOUT TYPE D'AERONEF**
SELBSTTRAGENDE KRANKENTRAGE FÜR FLUGZEUGE
SELF-SUPPORTING STRETCHER FOR ALL TYPES OF AIRCRAFT

(30) Priorité: 20.03.2001 FR 0103763
(43) Date de publication de la demande: 17.12.2003
(73) Titulaire: TMC Aero, 93012 Bobigny Cedex (FR)
(72) Inventeur: NEGRE, Gilles, F-60330 Le Plessis-Belleville (FR)
(74) Mandataire: de Zeeuw, Johan Diederick
(86) Numéro de dépôt international: PCT/FR2002/000965
(87) Numéro de publication internationale: WO 2002/074218

(56) Documents cités:
- EP-A- 0 885 604
- US-A- 4 483 499
- US-A- 5 918 331

## Description

### Domaine technique

La présente invention concerne les dispositifs pour transporter des personnes en position allongée dans les avions de transport de passagers ou autres et concerne en particulier une civière pour tout type d'aéronef.

### Etat de la technique

Afin d'effectuer un rapatriement sanitaire d'une personne devant restée immobile et/ou allongée ou d'un incubateur pour le transport de nouveaux nés, il est très important de pouvoir disposer d'un dispositif adapté pour ce type de transport dans tout type d'aéronef et en particulier sur les avions de lignes dans l'espace réservé aux sièges passagers sans avoir a démonter ceux-ci. De tels dispositifs sont utilisés par les compagnies aériennes. Ils comportent une partie plate démontable ou pliable destinée à recevoir la personne à rapatrier et sont équipés de moyens de fixation.

Les premiers modèles étaient adaptables sur les accoudoirs des sièges passagers à l'aide de deux sangles reliées aux ceintures des sièges passagers et une sangle reliée au rail de fixation des sièges passagers, le tout pour maintenir l'ensemble. Ces moyens de maintien par des sangles ne répondaient pas aux contraintes mécaniques en vigueur et n'étaient donc pas fiables au regard des exigences mécaniques demandées par l'aviation civile. De plus, la mise en place d'un tel dispositif n'était pas aisée et l'ajustement des sangles et le régalage des ceintures sur lesquelles les sangles sont ajustées nécessitaient beaucoup de temps.

La nouvelle réglementation en vigueur, en matière de transport de personnes lors d'un rapatriement sanitaire, réglemente les moyens de fixation sur les accoudoirs des sièges passagers. Les dispositifs utilisés maintenant sont donc fixés au sol par des moyens connus (voir EP-A-0885604). Néanmoins, s'ils répondent maintenant aux exigences mécaniques et réglementaires pour ce type d'installation, ces dispositifs comme leurs prédécesseurs énumérés ici, ne proposent pas de solutions pour stocker et maintenir les bouteilles d'oxygène et le matériel médical et de réanimation nécessaires dans le cas d'un rapatriement sanitaire. En pratique, ce matériel souvent lourd et encombrant est disposé devant les sièges à proximité de la civière. Ainsi, ce matériel utilise des places de passagers et constitue un danger potentiel si il est simplement posé sur les sièges ou simplement maintenu par les ceintures des sièges passagers non adaptées pour ce type de transport.

### Exposé de l'invention

C'est pourquoi le but principal de l'invention est de fournir un dispositif destiné à transporter des personnes en position couchée ou immobilisée et le matériel d'assistance médicale nécessaire au patient transporté en mobilisant le moins de sièges passagers possibles tout en respectant les contraintes de fiabilité et de réglementation exigées par les autorités.

Un autre but de l'invention est de proposer un dispositif adaptable dans tout type d'aéronef, d'utilisation aisée et rapide grâce à une fixation acceptée sur les rails des sièges passagers de tout type d'avions.

L'invention concerne donc un dispositif destiné à transporter une personne lors d'un rapatriement sanitaire dans tout type d'aéronef, comportant un châssis plat, deux pieds et des moyens de fixation, s'adaptant par-dessus deux ou trois sièges passagers rabattus caractérisé en ce que les pieds de fixation avant et arrière du châssis comportent respectivement des logements destinés à recevoir du matériel d'assistance médicale et en particulier un kit d'assistance respiratoire composé principalement d'une bouteille d'oxygène destinée à être stockée ou utilisée pendant le transport du patient.

### Description brève des dessins

Les buts, objets et caractéristiques de l'invention apparaîtront plus clairement à la lecture de la description qui suit faite en référence aux dessins dans lesquels,
La figure 1 est une vue de côté en coupe du dispositif selon l'invention,
La figure 2 est une vue de face en coupe du pied de fixation et du logement du pied de fixation du dispositif selon l'invention.

### Description détaillée de l'invention

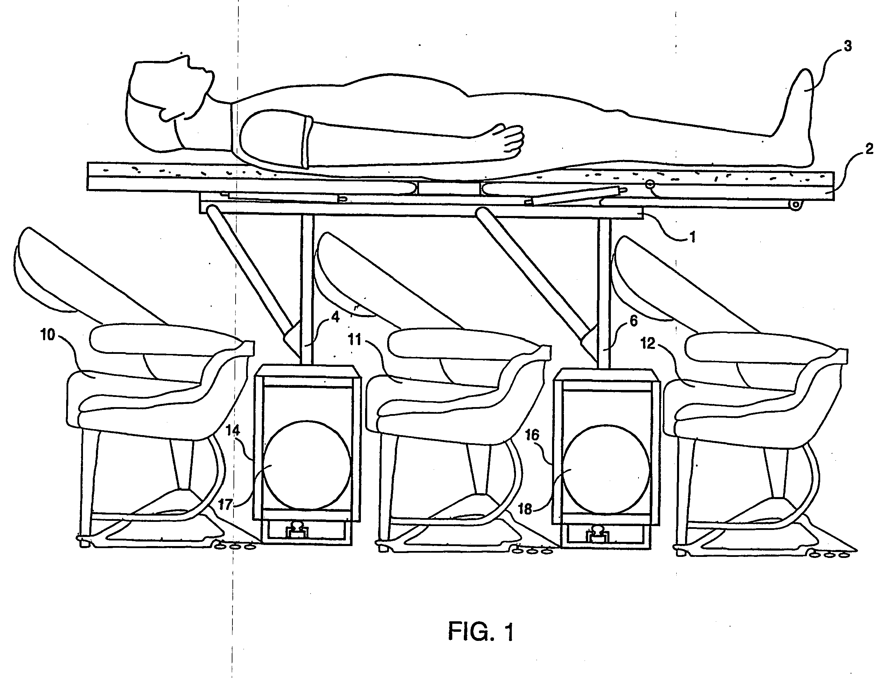

Le dispositif selon l'invention est représenté de façon générale sur la figure 1 et selon le mode d'installation du patient en position couchée. Le dispositif comporte un châssis de liaison 1 sur lequel est fixée une civière articulée 2 et deux pieds de fixation, avant 4 et arrière 6. Le dispositif est placé de telle façon que le châssis se trouve à environ 90cm du sol au-dessus de trois sièges passagers 10, 11 et 12 dont les dossiers ont été préalablement rabattus, le pied avant 4 étant fixé au sol entre les sièges 10 et 11 et le pied arrière 6 étant fixé au sol entre les sièges 11 et 12. Chaque pied 4 ou 6 comporte respectivement un logement 14 et 16 adapté pour recevoir un kit d'assistance médicale tel qu'un kit d'assistance respiratoire composé principalement d'une bouteille d'oxygène sous pression 17 ou 18 fixée sur un support plat. Lorsqu'il est placé et fixé dans son logement le kit oxygène est soit stocké soit utilisé pour assurer l'assistance respiratoire du patient se trouvant sur la civière. Dans ce dernier cas, le patient est alimenté en oxygène par un masque relié à la bouteille par un tuyau cheminant le long du pied de fixation avant.

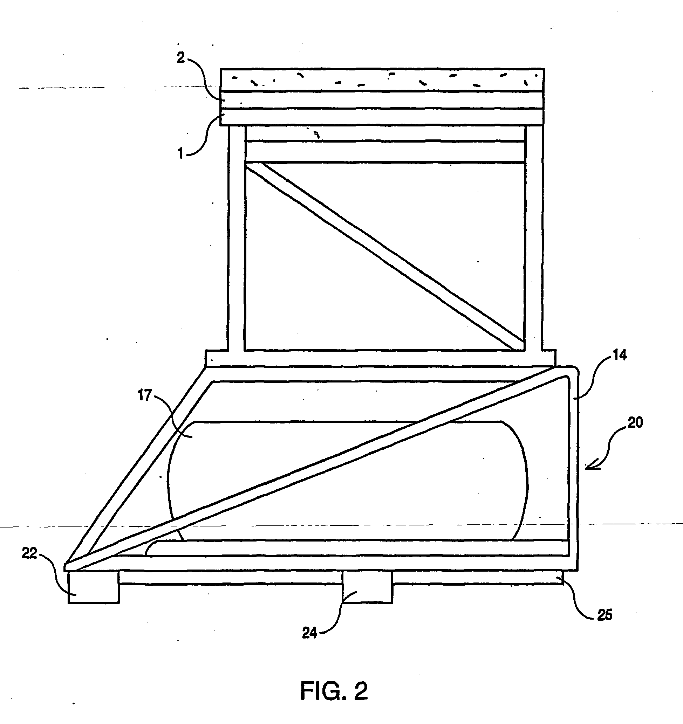

Sur la figure 2, le pied avant est représenté en coupe. La bouteille d'oxygène 17 est placée et fixée dans son logement 14 par l'ouverture 20. Le pied comprend 2 blocs de fixation ou ferrures 22 et 24, comportant des ergots de fixation, solidaires d'une règle 25 et coulissant le long de celle-ci. La règle 25 comporte des trous à intervalles réguliers dans lesquels viennent se loger les ergots des ferrures 22 et 24 afin d'immobiliser les ferrures sur la règle 25 et de les placer face aux rails des sièges passagers sur lesquels elles viennent se fixer. L'écartement entre les deux ferrures est fonction de l'intervalle entre les rails de fixation des sièges passagers, spécifique pour chaque avion. Lorsque les ferrures 22 et 24 sont placées sur les rails, un système de verrouillage par levier des ferrures sur les rails permet le blocage de celles-ci, et ce, sans l'apport d'outils mécaniques tels que pince, clef, tournevis.

Bien que l'équipement représenté dans les illustrations de ce brevet est une civière articulée multi-position pour tous patients, elle pourrait être aussi bien une barquette rigide pour des patients devant restés immobiles ou un incubateur pour le transport de nouveaux nés.

Le dispositif proposé par la présente invention pallie les inconvénients énumérés des dispositifs antérieurs par sa fiabilité et sa facilité d'emploi. En effet, la civière auto-portée s'adapte sur tout type d'aéronef et son installation ne nécessite pas le démontage des sièges passagers. En outre, elle comporte des pieds de fixation qui viennent se bloquer sur les rails des sièges passagers sur tous les types d'avion donc sur des rails de n'importe quel entraxe connu. Les kits d'assistance médicale du patient étant placés dans des logements se trouvant dans les pieds de fixation, ils ne gênent pas l'accès à la civière ou/et ne condamnent pas les places passagers à proximité de la civière. De plus, lorsqu'il s'agit de bouteilles d'oxygène lourdes et encombrantes, leur disposition dans les logements des pieds de la civière permet de les immobiliser afin de respecter les nomes de sécurité.

## Revendications

1. Dispositif destiné à transporter une personne (3) lors d'un rapatriement sanitaire dans tout type d'aéronef comportant un châssis plat (1), deux pieds (4) et (6) et des moyens de fixation s'adaptant par-dessus deux ou trois sièges passagers rabattus **caractérisé en ce que** les pieds de fixation avant (4) et arrière (6) du châssis comportent respectivement des logements (14) et (16) destinés à recevoir du matériel d'assistance médicale et en particulier un kit d'assistance respiratoire composé principalement d'une bouteille d'oxygène (17) ou (18) destinée à être stockée ou utilisée pendant le transport du patient (3).

2. Dispositif selon la revendication 1 dans lequel lesdits pieds (4) et (6) dudit châssis (1), comportent chacun deux moyens de fixation (22) et (24) s'adaptant sur les rails des sièges passagers.

3. Dispositif selon la revendication 1 ou 2 dans lequel lesdits moyens de fixation sont constitués de deux ferrures (22) et (24) solidaires d'une règle (25) comportant des trous à intervalles réguliers.

4. Dispositif selon l'une des revendications 1 à 3 dans lequel lesdites ferrures (22) et (24) d'un pied, coulissant le long de ladite règle (25), ont un écartement réglable.

5. Dispositif selon l'une des revendications 1 à 4 dans lequel lesdites ferrures (22) et (24) sont bloquées sur ladite règle (25) face aux rails de fixation des sièges passagers et sont verrouillées sur ceux-ci à l'aide d'un verrouillage par levier.

6. Dispositif selon l'une des revendications 1 à 5 dans lequel ledit châssis (1) reçoit une civière articulée multi-position (2).

7. Dispositif selon l'une des revendications 1 à 5 dans lequel ledit châssis (1) reçoit une barquette rigide pour des patients devant rester immobiles.

8. Dispositif selon l'une des revendications 1 à 5 dans lequel ledit châssis (1) reçoit un incubateur pour le transport de nouveaux nés.

## Claims

1. A device for transporting a person (3) during a medical repatriation in any type of aircraft, comprising a flat frame (1), two legs (4) and (6) and fixing means which are fitted above two or three folded-down passenger seats, **characterised in that** the front (4) and rear (6) fixing legs of the frame comprise, respectively, housings (14) and (16) for receiving medical assistance material and in particular a respiratory assistance kit made up principally of an oxygen bottle (17) or (18) for storage or use during the transport of the patient (3).

2. The device according to Claim 1, wherein said legs (4) and (6) of said frame (1) each comprise two fixing means (22) and (24) which are fitted onto the rails of the passenger seats.

3. The device according to Claim 1 or 2, wherein said fixing means are made up of two brackets (22) and (24) which are integral with a rule (25) comprising holes at regular intervals.

4. The device according to one of Claims 1 to 3, wherein said brackets (22) and (24) of one leg, which slide along said rule (25), have an adjustable spacing.

5. The device according to one of Claims 1 to 4, wherein said brackets (22) and (24) are blocked on said rule (25) opposite the fixing rails of the passenger seats and are locked onto these using a lever lock.

6. The device according to one of Claims 1 to 5, wherein said frame (1) receives an articulated multi-position stretcher (2).

7. The device according to one of Claims 1 to 5, wherein said frame (1) receives a rigid tray for patients who must remain immobile.

8. The device according to one of Claims 1 to 5, wherein said frame (1) receives an incubator for transporting newborn babies.

## Patentansprüche

1. Eine Vorrichtung zum Transportieren einer Person (3) während einer sanitären Repatriierung in jeder Art von Luftfahrzeug, die ein flaches Gestell (1), zwei Füße (4) und (6) und Befestigungsmittel, die sich über zwei oder drei heruntergeklappte Fluggastsitze hinweg anbringen lassen, beinhaltet, **dadurch gekennzeichnet, dass** die vorderen (4) und hinteren (6) Befestigungsfüße des Gestells jeweils Gehäuse (14) und (16), die zum Aufnehmen von Material für die ärztliche Versorgung und insbesondere eines Atmungsunterstützungssatzes, der hauptsächlich aus einer Sauerstoffflasche (17) oder (18), die zum Lagern oder Verwenden während des Transports des Patienten (3) bestimmt ist, zusammengesetzt ist, bestimmt sind, beinhalten.

2. Vorrichtung gemäß Anspruch 1, wobei die Füße (4) und (6) des Gestells (1) je zwei Befestigungsmittel (22) und (24) beinhalten, die sich auf den Schienen der Fluggastsitze anbringen lassen.

3. Vorrichtung gemäß Anspruch 1 oder 2, wobei die Befestigungsmittel aus zwei Beschlägen (22) und (24) bestehen, die mit einer Leiste (25) verbunden sind, die in regelmäßigen Abständen Löcher beinhaltet.

4. Vorrichtung gemäß einem der Ansprüche 1 bis 3, wobei die Beschläge (22) und (24) eines Fußes, die entlang der Länge der Leiste (25) gleiten, einen einstellbaren Zwischenraum aufweisen.

5. Vorrichtung gemäß einem der Ansprüche 1 bis 4, wobei die Beschläge (22) und (24) auf der Leiste (25) gegenüber den Befestigungsschienen der Fluggastsitze blockiert werden und mithilfe einer Hebelverriegelung auf diesen verriegelt werden.

6. Vorrichtung gemäß einem der Ansprüche 1 bis 5, wobei das Gestell (1) eine Gelenktrage mit mehreren Positionen (2) aufnimmt.

7. Vorrichtung gemäß einem der Ansprüche 1 bis 5, wobei das Gestell (1) eine starre Krankentrage für Patienten, die sich nicht bewegen dürfen, aufnimmt.

8. Vorrichtung gemäß einem der Ansprüche 1 bis 5, wobei das Gestell (1) einen Inkubator zum Transport von Neugeborenen aufnimmt.
